# EUROPÄISCHE PATENTSCHRIFT

(11) **EP 3 625 035 B1**
(45) Veröffentlichungstag und Bekanntmachung des Hinweises auf die Patenterteilung: **05.07.2023**
(21) Anmeldenummer: 18727188.7
(22) Anmeldetag: 14.05.2018
(51) Int. Cl.: B29C 65/04, B29C 65/48, B29C 65/78

(54) **ROLLENELEKTRODENANORDNUNG**
ROLLER ELECTRODE ASSEMBLY
ENSEMBLE GALET DE SOUDAGE

(30) Priorität: 17.05.2017 DE 102017110667
(43) Veröffentlichungstag der Anmeldung: 25.03.2020
(73) Patentinhaber: ConsultEngineerIP AG, 6343 Buonas (CH)
(72) Erfinder: GUBLER, Ulrich, 6343 Buonas (CH)
(74) Vertreter: Patentanwälte und Rechtsanwalt Weiß, Arat & Partner mbB
(86) Internationale Anmeldenummer: PCT/EP2018/062348
(87) Internationale Veröffentlichungsnummer: WO 2018/210732

(56) Entgegenhaltungen:
- JP-A- 2006 130 803
- US-A- 3 791 906

## Beschreibung

### Technisches Gebiet

Die Erfindung betrifft eine Rollenelektrodenanordnung nach dem Oberbegriff des Anspruchs 1 sowie eine Vorrichtung umfassend eine solche Rollenelektrodenanordnung und ein Verfahren zur Beaufschlagung eines Werkstücks mit einem hochfrequenten elektrischen Wechselfeld.

### Stand der Technik

Es ist bekannt, Rollenelektroden zum Hochfrequenzschweißen von Kunststoffen einzusetzen.

Wie andere Schweißverfahren dient auch das Hochfrequenzschweißen von Kunststoffen dem unlösbaren Verbinden zweier Werkstücke oder Abschnitte, hier zweier Kunststoff-Werkstücke bzw. -Abschnitte, welche mit Wärme und Druck beaufschlagt werden.

Es ist bekannt, Planen für Fahrzeuge, Sonnenschutz-Planen, Werbeflächen, Kleidung, Verpackungen, aufblasbare Produkte wie Schlauchboote und Hüpfburgen sowie Wasserbetten und flexible Flüssigkeitstanks und vieles mehr durch Kunststoff-Hochfrequenzschweißen herzustellen.

Beim Kunststoff-Hochfrequenzschweißen werden zwei zu verbindende Abschnitte eines oder mehrerer Kunststoff-Werkstücke durch Anlegen eines elektrischen Wechselfelds üblicherweise zugleich lokal erhitzt, wodurch sie aufgeschmolzen werden, und unter Anwendung von Druck miteinander verpresst, wodurch sie dauerhaft miteinander verbunden werden.

Die Erwärmung entsteht durch Wechselwirkung zwischen dem elektrischen Wechselfeld und polaren Bestandteilen des Polymers bzw. Kunststoffes. Hierbei kommt es zu einer lokalen Erwärmung, weil im Kunststoff vorhandene Dipole sich im elektrischen Feld auszurichten versuchen, obwohl sie fest in das Polymergefüge des Kunststoffes eingebunden sind.

Ob ein Kunststoff also mittels Hochfrequenzschweißen bearbeitbar ist, hängt von seinem molekularen Aufbau, genauer von der Anwesenheit von Dipolen ab. Aus diesem Grund lassen sich nur bestimmte Kunststoffe mittels Hochfrequenzschweißen bearbeiten. Maßgeblich für die Verschweißbarkeit ist der dielektrische Verlustfaktor des Kunststoffes, der ein Maß für den Energieverlust darstellt, den der betreffende Kunststoff als Isolierstoff im elektrischen Feld bewirkt. Beispielsweise kommen Kunststoffe wie thermoplastisches Polyurethan (TPU), Polyvinylchlorid (PVC), Ethylen-Propylen-Dien-Kautschuk (EPDM) oder Polymethylmethacrylat (PMMA) in Betracht.

Aufgrund der hohen Leistung, mit welcher Hochfrequenz-Kunststoff-Schweißanlagen betrieben werden, diese liegt teilweise im zweistelligen Kilowattbereich, sind bestimmte einzuhaltende Frequenzen gesetzlich vorgegeben. Am häufigsten wird ein elektrisches Wechselfeld mit einer Frequenz von 27.12 MHz verwendet, da es sich um ein sogenanntes "ISM-Band" handelt, welches beispielsweise von Hochfrequenzgeräten in der Industrie frei benutzt werden kann.

Maschinen zum Hochfrequenzschweißen (HF-Schweißen) von Kunststoffen umfassen in der Regel einen Generator bzw. Hochfrequenzgenerator, Schweißelektroden und eine Presse, wobei die vorgenannten Bauteile zumindest teilweise zusammengefasst sein können. Der Generator dient der Erzeugung einer hochfrequenten elektrischen Wechselspannung, beispielsweise mit 27.12 MHz, und üblicherweise mehreren Kilovolt. Die Presse dient dazu, die Schweißelektroden auf das zu bearbeitende Werkstück bzw. die zu verschweißenden Abschnitte zu pressen und die Elektroden dienen der lokalen Erhitzung des Kunststoffes, indem sie das Wechselfeld erzeugen.

Vorrichtungen und Verfahren zum Hochfrequenz-Kunststoffschweißen sind in zahlreichen Ausführungen bekannt. Wird die Anlage kontinuierliche betrieben, so ist es beispielsweise bekannt, die zu verschweißenden Kunststoff-Abschnitte zwischen zwei rollenförmigen Elektroden hindurch zu bewegen. Ein hierbei anzutreffendes Problem stellt die Funkenbildung an mehreren Orten dar.

Einerseits kann Funkenbildung an einer Kontaktstelle zwischen einer vom Generator ausgehenden Zuleitung und der Elektrode, welche bei sich im Betrieb drehenden Elektroden oftmals als Schleifkontakt ausgebildet ist. Im Stand der Technik wurde dieser Funkenbildung durch die Auswahl hochwertiger und zuverlässiger Schleifkontakte entgegengetreten.

Andererseits kann Funkenbildung durch Plasmaentladung auftreten. Zu dieser Plasmaentladung kommt es in Bereichen zwischen den Elektroden, an denen eine ausreichend hohe elektrische Feldstärke vorliegt. Im Fall von rollenförmigen Elektroden sind derartige Bereiche beidseits einer Andruckzone zwischen Elektrode und zu bearbeitendem Werkstück vorhanden und im Wesentlichen keilförmig.

Aus dem Stand der Technik ist beispielsweise die DE 1 154 932 A bekannt, welche auch das Problem der Funkenbildung adressiert. Gemäß der DE 1 154 932 A tritt die Funkenbildung jedoch auf Grund mangelhafter Punktkontakte auf. Dementsprechend schlägt die DE 1 154 932 A vor, eine der rollenförmigen Elektroden mit einer außenliegenden schraubenförmigen Drahtfeder auszustatten, die flexibel ist und von der gegenüberliegenden rollenförmigen Elektrode teilweise eingedrückt werden kann. Somit tritt ein flächiger Kontakt an die Stelle des Punktkontaktes, was das Risiko des Funkenschlags verringert. Allerdings sind noch immer Funkenschläge durch Plasmaentladungen in demjenigen Bereich zu befürchten, welcher direkt an die Kontaktstelle beider Elektroden angrenzt. Dieses Problem wird von der DE 1 154 932 A nicht gelöst.

Ein weiteres Problem bekannter Vorrichtungen und Verfahren zum Hochfrequenz-Kunststoffschweißen ist in einer unzureichenden Druckbeaufschlagung zu verschweißender Kunststoffabschnitte zu sehen.

Um eine Andruckzone zu verlängern, wurde im Stand der Technik vorgeschlagen, einer rollenförmigen Elektrode, welche zugleich als Presse dient, eine konkave Gegenelektrode zuzuordnen, welche komplementär zur rollenförmigen Elektrode geformt ist und somit die Andruckzone verlängert. Dies macht die Vorrichtung jedoch sehr unflexibel hinsichtlich der Ausgestaltung verschiedener zu bearbeitender Werkstoffe. Beispielsweise kann eine Schweißnahtgeometrie, welche Kurven aufweist, mit einer konkaven Gegenelektrode nicht bearbeitet werden.

Ferner ist im Stand der Technik an zusätzliche Andruckrollen gedacht, welche jedoch ebenfalls die Komplexität der Anlage zu Lasten der Flexibilität hinsichtlich etwaiger zu bearbeitender Werkstoffe erhöhen. Auch hier ergibt sich nämlich stets das Problem, dass nur geradlinige Schweißnähte ohne Kurven erzeugt werden können.

Im Stand der Technik sind ausserdem die DE 299 06 706 U1 betreffend eine robotergeführte Rollennaht-Schweißzange sowie die GB 2 367 784 A betreffend eine Vorrichtung und ein Verfahren zum Verschweißen polymerer Werkstücke bekannt.

Aus dem Stand der Technik ist ferner die JP 2006 130 803 A1 bekannt, welche eine Rollenelektrodenanordnung für das Hochfrequenz-Schweissen betrifft.

Ferner ist die US 3 791 906 A1 bekannt, welche ein Verfahren für die HitzeBehandlung von Kunststoffen offenbart.

Weiterhin ist die DE 972 333 B bekannt, welche eine Vorrichtung zum Hochfrequenzschweissen offenbart.

### Aufgabe der Erfindung

Die Aufgabe der vorliegenden Erfindung ist es, die Nachteile aus dem Stand der Technik zu überwinden. Insbesondere soll eine Rollenelektrodenanordnung bzw. eine Vorrichtung umfassend eine solche Rollenelektrodenanordnung bereitgestellt werden, welche hinsichtlich des oder der zu verschweißenden Werkstücke(s) möglichst flexibel ist und zugleich ein möglichst optimales Andrücken bzw. eine möglichst optimale Andruckzone bereitstellt und die Gefahr von Funkenschlag effizient verringert.

### Lösung der Aufgabe

Zur Lösung der Aufgabe führen die Gegenstände der unabhängigen Ansprüche.

Vorteilhafte Ausgestaltungen sind in den Unteransprüchen beschrieben.

Eine erfindungsgemäße Rollenelektrodenanordnung zur Beaufschlagung eines Werkstücks mit einem hochfrequenten elektrischen Wechselfeld umfasst einen Kern, welcher zumindest teilweise aus elektrisch leitendem Material besteht und von einer deformierbaren elektrisch isolierenden Beschichtung, nachfolgend lediglich als deformierbare Beschichtung bezeichnet, umgeben ist.

Wird die Rollenelektrodenanordnung beispielsweise auf zwei miteinander zu verschweißende Kunststoffabschnitte gedrückt, um diese zu verschweißen, so verformt sich die deformierbare Beschichtung, was zu einer Vergrößerung der Andruckzone führt. Indem der für das Verschweißen nötige Druck im Vergleich zu unbeschichteten Rollenelektrodenanordnungen und im Vergleich zu Rollenelektrodenanordnungen mit einer starren Beschichtung über eine vergrößerte Zone hinweg auf die zu verbindenden Kunststoffabschnitte ausgeübt wird, werden diese länger mit Druck beaufschlagt, was wiederum die Qualität der Verbindung verbessert. Beispielsweise kann daher beim kontinuierlichen HF-Kunststoffschweißen die Geschwindigkeit gegenüber bekannten Verfahren erhöht werden. Weiterhin kann auf separate Andruckelemente wie Andruckrollen und dergleichen verzichtet werden.

Ein wesentlicher Vorteil ist jedoch, dass die deformierbare Beschichtung elektrisch isolierend ist. Hierdurch wird in unmittelbarer Nachbarschaft zur Andruckzone, innerhalb der die Feldstärke des elektrischen Wechselfelds sehr stark ist, die Gefahr von Plasma-Bildung und entsprechend auch von PlasmaEntladung zumindest stark verringert.

Die deformierbare Beschichtung kann aus einem Kunststoff bestehen. Hierbei sollte darauf geachtet werden, dass der Kunststoff nicht oder nicht wesentlich mit dem elektrische Wechselfeld in Wechselwirkung tritt bzw. diesem gegenüber weitgehend inert ist. Hierbei kann beispielsweise an entsprechende Elastomere oder Silikone gedacht sein. Eine Dicke der deformierbaren Beschichtung kann beispielsweise zwischen 0,1 mm und 5 mm liegen. Es kann auch an den Bereich zwischen 0.2 mm und 4 mm gedacht sein, ferner an den Bereich zwischen 0,3 mm und 3 mm sowie an den Bereich zwischen 0,4 mm und 2,5 mm sowie bevorzugt an den Bereich zwischen 0,5 mm und 2 mm.

Hierbei wird im Rahmen der vorliegenden Erfindung unter Rollenelektrodenanordnung eine Einrichtung bzw. Anordnung umfassend Elektrode mit kreisförmigem Querschnitt angesehen, welche sich rollend über ein Werkstück hinweg bewegen kann. Falls eine feststehende Rollenelektrodenanordnung verwendet werden soll, kann alternativ daran gedacht sein, das Werkstück entsprechend relativ zur Elektrode zu bewegen, während diese zwar ortsfest gelagert ist, aber gleichzeitig eine Drehbewegung ausführt.

Die Rollenelektrodenanordnung ist kugelförmig oder zumindest im Wesentlichen kugelförmig ausgebildet.

Ein besonderer Vorteil einer zumindest im Wesentlichen kugelförmigen Rollenelektrodenanordnung liegt darin, dass auch zu verbindende Kunststoff-Abschnitte mit komplexer Schweißnaht-Geometrie zuverlässig verschweißt werden können. Zahlreiche aus dem Stand der Technik bekannte Rollenelektroden können demgegenüber nur solche Abschnitte zuverlässig verschweißen, die eine geradlinige Schweißnaht erfordern.

Bei dem zu bearbeitenden Werkstück oder bei den zu verbindenden bzw. verschweißenden Abschnitten handelt es sich um verschweißbare Kunststoffe mit entsprechend hohem dielektrischen Verlustfaktor. Bei dem hochfrequenten elektrischen Wechselfeld handelt es sich vorzugsweise um ein Wechselfeld mit einer Frequenz von 27.12 MHz. Es kann aber auch an andere Frequenzen, insbesondere an Industriefrequenzen bzw. ISM-Bänder gedacht sein.

Insbesondere kann an folgende ISM-Bänder gedacht sein: 6,765 MHz bis 6,795 MHz; 13,553 MHz bis 13,567 MHz; 26,957 MHz bis 27,283 MHz; 40,66 MHz bis 40,70 MHz; 433,05 MHz bis 434,79 MHz oder 902 MHz bis 928 MHz. Ganz besonders kann an die Zentralfrequenzen der ISM-Bänder gedacht sein, beispielhaft seien hier 13.56 MHz, 40,68 MHz oder 433,92 MHz aufgeführt.

Von der vorliegenden Erfindung soll auch eine Vorrichtung zur Beaufschlagung eines Werkstücks mit einem hochfrequenten elektrischen Wechselfeld umfassend einen Hochfrequenzgenerator sowie zumindest eine Rollenelektrodenanordnung wie vorstehend beschrieben umfasst sein. Diese Vorrichtung wird nachfolgend beschrieben.

Derartige Generatoren sind aus dem Stand der Technik hinreichend bekannt. Die Vorrichtung umfasst stets eine zweite Elektrode bzw. Gegenelektrode oder Gegenelektrodenanordnung, wobei hier beispielsweise auch an eine flächige Elektrode gedacht sein kann. So ist es möglich, einen Teil eines Tisches, auf welchem die zu verschweißenden Abschnitte liegen, in Form einer flächigen Elektrode auszubilden. Es kann auch daran gedacht sein, eine flächige Elektrode in einen Tisch oder dergleichen einzulassen.

Bevorzugt ist die Gegenelektrodenanordnung jedoch so ausgebildet, wie vorstehend für die Rollenelektrodenanordnung beschrieben. Eine solche Anordnung ist deutlich einfacher handhabbar als eine Anordnung, bei welcher ein Teil des Tisches als Elektrode ausgebildet ist, beispielsweise, weil der Tisch und die zugehörige Elektrode, welche beispielsweise im Tisch eingelassen sein kann, üblicherweise sehr gross ausfallen.

Vorzugsweise wirken beide Elektrodenanordnungen auch als Andruckelement und werden mit entsprechenden Mitteln in Richtung auf das Werkstück zu mit Kraft beaufschlagt, so dass auf separate Andruckelemente verzichtet werden kann.

Vorzugsweise ist die zumindest eine Rollenelektrodenanordnung eingerichtet, um angetrieben zu werden, um das zu bearbeitende Werkstück zu transportieren. Es sind somit keine separaten Vorschub- oder Transportmittel nötig. Umfasst die Vorrichtung zwei Rollenelektrodenanordnungen, so kann einerseits nur eine angetrieben sein, wobei die zweite sich vorzugsweise durch die von der ersten Rollenelektrodenanordnung bewirkte Bewegung des Werkstücks passiv dreht. Andererseits kann auch daran gedacht sein, dass beide Rollenelektrodenanordnungen sich aktiv drehen bzw. angetrieben werden, was vorzugsweise synchron erfolgen sollte.

Die Rollenelektrodenanordnung bzw. die Rollenelektrodenanordnungen können jeweils in einem Luftlager oder in einem Rollenlager gelagert sein. Es sind zahlreiche Arten der Lagerung denkbar, welche beispielsweise über eine zentrale Achse der Rollenelektrodenanordnung an dieser angreifen. Für die im Wesentlichen kugelförmigen Rollenelektrodenanordnungen kommt insbesondere eine Lagerung über Rollenlager bzw. im Allgemeinen eine Lagerung ähnlich bekannter Computer-Mäuse älterer Generation oder ähnlich der Lagerung bekannter Trackballs in Eingabegeräten zum Einsatz. Ferner kann bei den zumindest im Wesentlichen kugelförmigen Rollenelektrodenanordnungen an die Verwendung von Luftlagern gedacht sein.

Vorzugsweise umfasst die Vorrichtung eine Einrichtung zur kontaktlosen Übertragung von Energie bzw. einer elektrischen Hochfrequenz auf die zumindest eine Rollenelektrodenanordnung. Daraus ergibt sich der Vorteil, dass, beispielsweise im Gegensatz zu Schleifkontakten und dergleichen, die Gefahr eine Funkenschlags an einer Kontaktstelle zwischen Zuleitung und Elektrode deutlich sinkt. Die kontaktlose Übertragung kann beispielsweise durch kapazitive Kopplung erfolgen, wobei Energie mittels eines elektrischen Feldes drahtlos übertragen wird. Entsprechende Vorrichtungen sind aus dem Stand der Technik hinreichend bekannt.

Wie bereits ausgeführt kann einer Rollenelektrodenanordnung eine zweite Rollenelektrodenanordnung zugeordnet sein, welche sowohl die Aufgabe der Gegenelektrode als auch die Aufgabe eines Gegendruckelements erfüllt.

Alternativ kann die Vorrichtung einen Tisch als Gegendruckelement umfassen In den Tisch kann auf bereits beschriebene Weise eine flächige Gegenelektrode eingelassen bzw. eingearbeitet sein.

Ferner kann die Vorrichtung nicht nur alternativ zur Gegenelektrode sondern auch komplementär einen Tisch umfassen. Dieser kann beispielsweise als Auflagentisch für die zu verschweißenden Werkstücke bzw. Abschnitte dienen. Der Auflagentisch kann beispielsweise eine Ausnehmung umfassen, durch welche die Gegenelektrode die zu verschweißenden Werkstücke kontaktiert.

Ein als Gegendruckelement dienender Tisch mit eingelassener Gegenelektrode kann hierbei ein im Wesentlichen planes Gegendruckelement darstellen. Alternativ kann der Tisch jedoch dreidimensionale Konturen aufweisen, welche beispielsweise an die zu verbindenden Abschnitte angepasst sein können.

Es kann auch an eine Vorrichtung gedacht sein, welche ein Achssystem oder einen Knickarmroboter umfasst, an welchem die Rollenelektrodenanordnung(en) geführt ist bzw. geführt sind. Durch eine solche Anordnung kann das Verschweißen hochautomatisiert und sehr schnell durchgeführt werden. Entsprechende Achssysteme und Knickarmroboter sind aus dem Stand der Technik hinreichend bekannt.

In sämtlichen der vorstehend beschriebenen Ausführungsbeispiele kann daran gedacht sein, die Rollenelektrodenanordnung bzw. zumindest eine der Rollenelektrodenanordnungen seitlich mit geerdeten Metallscheiben zu versehen, welche gegenüber der Rollenelektrodenanordnung elektrisch isoliert sind. Dies dient vorzugsweise der Isolation und kann Arbeitsunfälle sowie unerwünschten Funkenschlag verhindern.

Die vorliegende Erfindung betrifft ferner ein Verfahren zur Beaufschlagung eines Werkstücks mit einem hochfrequenten elektrischen Wechselfeld mittels einer Vorrichtung wie vorstehend beschrieben, wobei das zu bearbeitende Werkstück mit einer Rollenelektrodenanordnung wie ebenfalls vorstehend beschrieben auch mit einer Kraft beaufschlagt wird.

Hinsichtlich dieses Verfahrens kann daran gedacht sein, die Übertragung der elektrischen Hochfrequenz auf die Rollenelektrodenanordnung bzw. zumindest eine der Rollenelektrodenanordnungen kontaktlos erfolgen zu lassen, beispielsweise durch das Prinzip der kapazitiven Kopplung.

Bei der Vorrichtung handelt es sich insbesondere um eine Vorrichtung zum Hochfrequenzschweißen von Kunststoffen. Es kann aber auch daran gedacht sein, das elektrische Wechselfeld für andere Zwecke zu nutzen, beispielsweise zum Verleimen zweier Werkstücke oder Abschnitte.

Im Allgemeinen kann stets daran gedacht sein, zwei Abschnitte desselben Werkstücks oder zwei Abschnitte verschiedener Werkstücke miteinander zu verbinden, insbesondere zu verschweißen.

Werden zwei Werkstücke miteinander verbunden, so ist vorzugsweise daran gedacht, dass diese aus demselben Material gefertigt sind. Es kann aber auch daran gedacht sein, dass beide aus unterschiedlichen Materialien gefertigt sind. Hierbei kann es sich als vorteilhaft erweisen, beispielsweise thermoplastisches Polyurethan (TPU) als Verbinder bzw. Schweißzusatz zu verwenden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Anordnung umfassend zwei Rollenelektroden 7 gemäß dem Stand der Technik,
Figur 2 eine Anordnung umfassend eine Rollenelektrode 7 und ein flächige Gegenelektrode 8 gemäß dem Stand der Technik,
Figur 3 eine Anordnung umfassend eine Rollenelektrodenanordnung 1 gemäß einem Ausführungsbeispiel der vorliegenden Erfindung,
Figur 4 eine geschnittene Seitenansicht nach Figur 3 mit weiteren Details,
Figur 5 eine Anordnung umfassend zwei Rollenelektrodenanordnungen 1 gemäß einem weiteren Ausführungsbeispiel der vorliegenden Erfindung,
Figur 6 eine geschnittene Seitenansicht nach Figur 5 mit weiteren Details in einer ersten Variante,
Figur 7 eine geschnittene Seitenansicht nach Figur 5 mit weiteren Details in einer zweiten Variante und
Figur 8 eine geschnittene Seitenansicht nach Figur 5 mit weiteren Details in einer dritten Variante.

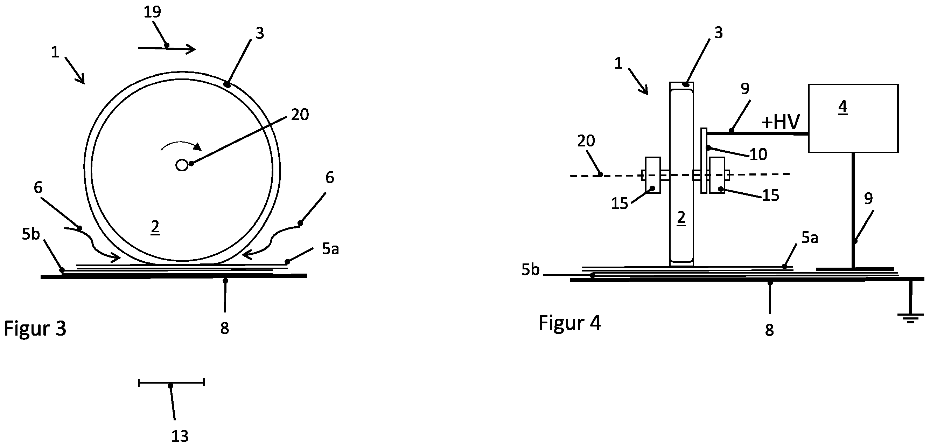

Da die Ausführungsbeispiele gemäss den Figuren 3 bis 8 keine zumindest im wesentlichen kugelförmigen Rollenelektrodenanordnungen zeigen, sind sie nicht Teil der Erfindung. Die nicht erfindungsgemässen Ausführungsbeispiele nach den Figuren 3 bis 8 erleichtern jedoch das Verständnis der vorliegenden Erfindung.

### Ausführungsbeispiel

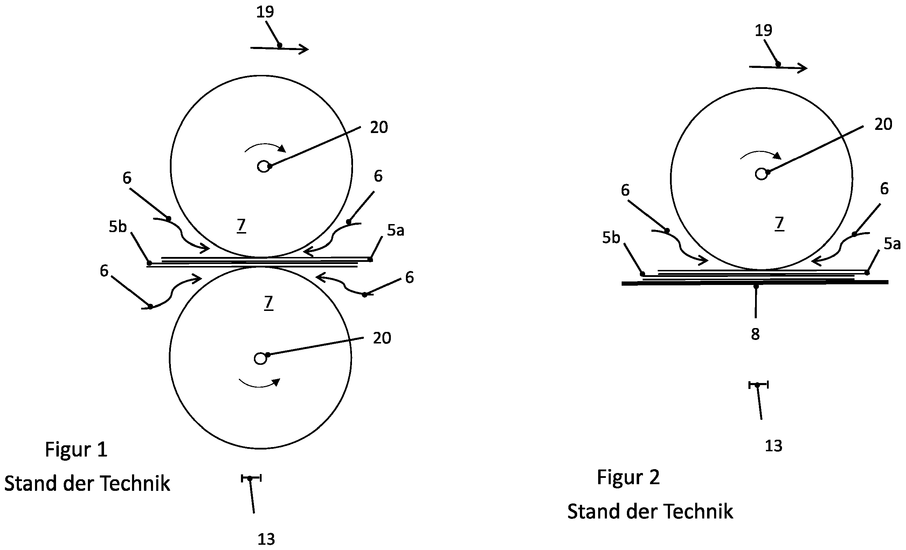

In Figur 1 ist eine Anordnung umfassend zwei Rollenelektroden 7 gemäß dem Stand der Technik dargestellt.

Figur 2 zeigt eine Anordnung gemäß dem Stand der Technik, welche im Vergleich zur Anordnung nach Figur 1 anstatt der unteren Rollenelektrode 7 eine flächige Gegenelektrode 8, beispielsweise in Form eines Tisches, umfasst.

Figur 3 zeigt eine Anordnung analog Figur 2 jedoch mit einer Rollenelektrodenanordnung 1.

Die Rollenelektrodenanordnung 1 umfasst einen Kern 2 und eine deformierbare elektrisch isolierende Beschichtung 3, nachfolgend als deformierbare Beschichtung 3 bezeichnet.

Figur 4 zeigt eine geschnittene Seitenansicht nach Figur 3, wobei weitere Details sichtbar sind, insbesondere Lager 15 der Rollenelektrodenanordnung 1, ein Generator 4 und Zuleitungen 9. Der in Figur 4 gezeigten Ansicht ist deutlich entnehmbar, dass lediglich eine Lauffläche des Kerns 2 von der deformierbaren Beschichtung 3 umgeben ist.

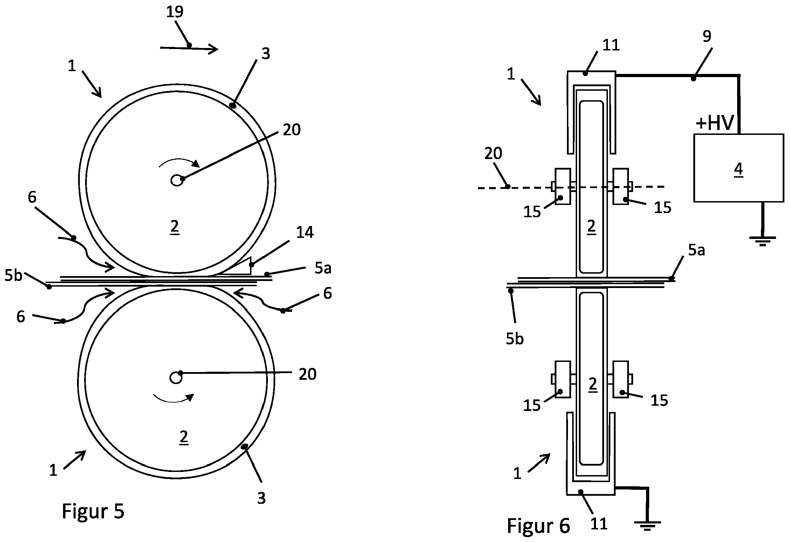

Figur 5 zeigt eine Anordnung analog Figur 1 jedoch mit zwei Rollenelektrodenanordnungen 1.

Die Figuren 6 bis 8 zeigen geschnittene Seitenansichten der Darstellung nach Figur 5 mit weiteren Details, welche sich jeweils hinsichtlich ihrer Verschaltung, insbesondere hinsichtlich Kontaktierung mit dem Generator 4, unterscheiden. In den Figuren 6 bis 8 steht jeweils zumindest eine der Rollenelektrodenanordnungen 1 kontaktlos über eine Einrichtung zur kontaktlosen Übertragung 11 mit dem Generator 4 in Verbindung. Den Figuren 6 bis 8 ist ferner deutlich entnehmbar, dass nicht nur eine Lauffläche des Kerns 2 von der deformierbaren Beschichtung 3 umgeben ist, sondern diese auch beide Seitenflächen des Kerns 2 umfängt.

Bei den Einrichtungen zur kontaktlosen Übertragung 11 handelt es sich um U-förmige, die Rollenelektrodenanordnung 1 teilweise umgreifende, Elektroden.

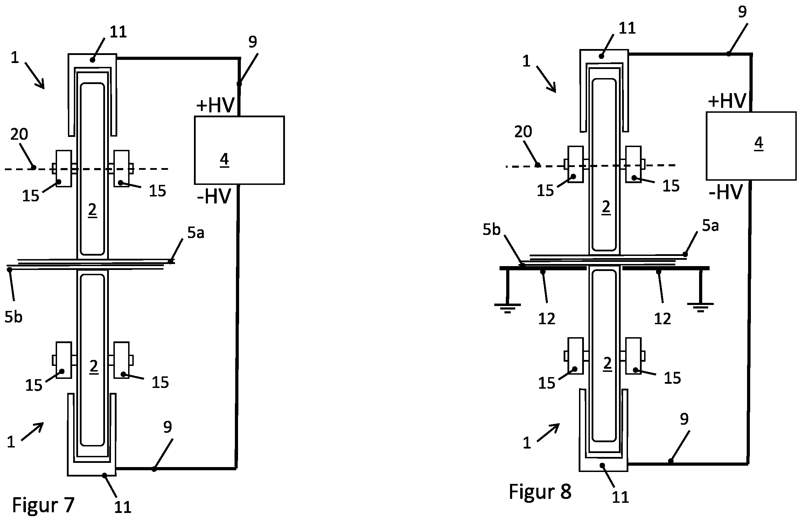

In Figur 6 ist die unten in der Figur gezeigte Rollenelektrodenanordnung 1, welche als Gegenelektrode fungiert, über die Einrichtung zur kontaktlosen Übertragung 11 geerdet. Ein Ausgang des Generators 4 ist ebenfalls geerdet. In Figur 7 stehen beide Rollenelektrodenanordnungen 1 mit dem Generator 4 in Verbindung, sind aber mit gegenläufiger Polarität beaufschlagt.

In Figur 8 ist zusätzlich zur Anordnung nach Figur 7 ein geerdeter Auflagentisch 12 vorgesehen.

Der besseren Übersicht halber sind nicht in sämtlichen Figuren sämtliche dargestellten Merkmale durch Bezugsziffern bezeichnet.

Bezugnehmend auf die Figuren 1 bis 8 erklärt sich die Funktionsweise der Vorrichtung folgendermassen:
Aus dem Stand der Technik sind Vorrichtungen umfassend zumindest eine Rollenelektrode 7 bekannt, welche zwei Werkstücke 5a, 5b bzw. zwei Abschnitte jeweils eines Werkstückes miteinander verschweißen.

In einer Vorrichtung nach Figur 1 drehen sich hierzu beide Rollenelektroden 7 gegenläufig um die Drehachsen 20, wie die Pfeile innerhalb der Rollenelektroden 7 andeuten. Hierbei bewegen sich die Rollenelektroden 7 relativ zu den Werkstücken 5a, 5b in Richtung eines Pfeils 19.

In einer Vorrichtung nach Figur 2 dreht sich die Rollenelektrode 7 und bewegt sich somit in Richtung des Pfeils 19 entlang der auf einer flächigen Gegenelektrode 8, welche meist als Tisch oder als Teil eines Tisches fungiert, gelagerten zu verschweißenden Werkstücke 5a, 5b. Bei beiden Ausführungen bekannter Vorrichtungen kommt es beispielsweise in einem im Wesentlichen keilförmigen Bereich, welcher durch Pfeile 6 angedeutet ist, zu unerwünschter Plasmabildung und Plasmaentladung, da in diesem Bereich die Feldstärke des von den Rollenelektroden 7 ausgehenden bzw. erzeugten elektrischen Feldes sehr stark ist. Die Gefahr einer solchen Plasmaentladung mit Funkenbildung und den damit einhergehenden unerwünschten Effekten und Gefahren steigt proportional zur Feldstärke und ist somit bei den in den Figuren 1 und 2 gezeigten Anordnungen in einer unmittelbaren Umgebung einer Andruckzone, innerhalb der die Werkstücke 5a, 5b von den Elektroden 7, 8 aufeinandergepresst werden, am höchsten.

Eine Länge 13 der jeweiligen Andruckzone, also desjenigen Abschnitts, innerhalb welchem die Werkstücke 5a, 5b mit Druck beaufschlagt werden, ist der Übersicht halber unterhalb der Vorrichtungen angedeutet.

In der Anordnung nach Figur 3 ist der Kern 2 die eigentliche Elektrode, welche von der deformierbaren Beschichtung 3 umgeben ist.

Die Deformation der deformierbaren Beschichtung 3 der Rollenelektrodenanordnung 1 ist deutlich erkennbar, was zu einer im Vergleich zur Anordnung nach Figur 2 signifikant vergrößerten Länge 13 der Andruckzone führt. Weiterhin geht aus Figur 3 hervor, dass die unmittelbare Umgebung desjenigen Punktes, an welchem sich die Elektrode bzw. der Kern 2 und die flächige Gegenelektrode 8 am nächsten kommen, von der deformierbaren Beschichtung 3 gestellt wird bzw. ausgefüllt ist. Diejenigen Stellen der im Wesentlichen keilförmigen Bereiche, welche durch Pfeile 6 angedeutet sind, an denen Luft vorhanden ist und Plasma gebildet werden kann, weisen eine im Vergleich zur Anordnung nach Figur 2 deutlich größere Entfernung zwischen den Elektroden, also in Figur 3 dem Kern 2, und der flächigen Gegenelektrode 8 auf, so dass auch die Feldstärke und somit die Gefahr von Plasmaentladungen deutlich verringert ist.

Der Figur 3 ist ebenfalls deutlich zu entnehmen, dass der Kern 2, also die eigentliche Elektrode, etwa in einer Mitte der Andruckzone dem Werkstück 5a bzw. dem obenauf liegenden zu verschweißenden Abschnitt doch so nahe kommt, dass eine für das Verschweißen ausreichende Feldstärke gewährleistet ist.

In Figur 4 ist dargestellt, dass der Generator 4, welcher die hochfrequente elektrische Wechselspannung erzeugt, über eine Zuleitung 9 und einen Abnehmer 10, welcher in Form eines Schleifkontakts ausgebildet ist, mit dem Kern 2 in Verbindung steht. Weiterhin ist die flächige Gegenelektrode 8 geerdet und es besteht eine Kopplung zwischen dem Referenzpotential und dem Generator 4 über das Prinzip der kapazitiven Kopplung zwischen der flächigen Gegenelektrode 8 und dem Generator 4.

Die Funktionsweise der in den Figuren 5 bis 8 dargestellten Vorrichtungen sowie durch Verwendung der Rollenelektrodenanordnungen 1 herbeigeführte Vorteile ergeben sich in Analogie zu den vorstehenden Ausführungen betreffend die Figuren 3 und 4. Diese gelten selbstverständlich sowohl für die oben in den Figuren 5 bis 8 dargestellte Rollenelektrodenanordnungen 1 als auch für die unten dargestellte Rollenelektrodenanordnungen 1, welche die Gegenelektrode darstellen. Lediglich zur Veranschaulichung ist in Figur 5 einer der im Wesentlichen keilförmigen Bereiche 14 überproportional vergrößert dargestellt und nicht nur durch einen Pfeil 6 angedeutet. Aufgrund der Wölbung der deformierbaren Beschichtung 3 ist der Bereich 14 tatsächlich nur näherungsweise keilförmig, ferner ist er natürlich nicht tatsächlich als abgegrenzter Bereich vorhanden.

Gemäß der in Figur 6 gezeigten Ausführungsform ist nur die obere Rollenelektrodenanordnung 1 an einen ersten Ausgang des Generators 4 angeschlossen. Entsprechend sind die unten gezeigte Rollenelektrodenanordnung 1 und ein zweiter Ausgang des Generators geerdet.

Durch "+HV" und "-HV" ist zahlreichen Figuren eine Polarität der vom Generator 4 erzeugten Spannung als Momentaufnahme dargestellt. Die Polarität der Ausgänge des Generators 4 ändert sich natürlich mit der Frequenz der erzeugten Wechselspannung.

Gegenüber der in Figur 6 gezeigten Anordnung, gemäß der die unten in der Figur gezeigte Rollenelektrodenanordnung 1 und der Generator 4 geerdet sind, weisen die Anordnungen gemäß den Figuren 7 und 8 den Vorteil auf, dass die jeweils unten in den Figuren dargestellten Rollenelektrodenanordnungen 1 mit dem Generator 4 verbunden sind. Hierbei werden gemäß den Anordnungen nach den Figuren 7 und 8 die untere und die obere Rollenelektrodenanordnung 1 jeweils mit gegenläufiger Polarität der elektrischen Wechselspannung beaufschlagt. Hierdurch kann die Gefahr von Plasmaentladungen weiter reduziert werden, da sich die Potentialdifferenz zwischen den Elektroden bzw. Kernen 2 nicht in Differenz zum geerdeten Nullpotential ergibt.

Der geerdete Auflagentisch 12 bewirkt abermals eine Erhöhung der Sicherheit.

Obwohl nur einige bevorzugte Ausführungsbeispiele beschrieben und dargestellt wurden, ist es offensichtlich, dass der Fachmann zahlreiche Modifikationen hinzufügen kann, ohne Wesen und Umfang der Erfindung zu verlassen.

Beispielsweise kann anstelle eines Tisches an einen Rahmen oder dergleichen gedacht sein.

Ferner kann in sämtlichen der vorgenannten Ausführungsbeispiele ein solcher Tisch, ein solcher Rahmen oder dergleichen vorgesehen sein, um die zu verbindenden Werkstücke 5a, 5b zu lagern bzw. während des Verschweißens zu halten. Ein solcher Tisch, ein solcher Rahmen oder dergleichen kann somit allein zur Halterung bzw. Lagerung der zu verbindenden Werkstücke 5a, 5b bzw. Abschnitte, oder auch zusätzlich als Gegendruckelement und gegebenenfalls Gegenelektrode Verwendung finden

Die deformierbare Beschichtung 3 kann in sämtlichen Ausführungsbeispielen entweder nur auf der Lauffläche des Kerns 2 vorgesehen sein oder den Kern 2 vollständig umfangen. Die deformierbare Beschichtung 3 soll hierbei vorzugsweise so angeordnet sein, dass sie einen Funkenschlag durch Plasmabildung effektiv verhindern kann. Es könnte auch daran gedacht sein, die Lauffläche des Kerns 2 und direkt angrenzende Abschnitte der Seitenflächen des Kerns 2, nicht aber die gesamten Seitenflächen, mit der deformierbaren Beschichtung zu versehen.

Ist von einem Verschweißen zweier Werkstücke 5a, 5b die Rede, so soll stets auch das Verschweißen zweier Abschnitte eines oder mehrerer Werkstücke umfasst sein.

Die Einrichtung 11 zur kontaktlosen Übertragung muss nicht zwangsläufig als U-förmige Elektrode ausgestaltet sein, es können auch andere derartige Einrichtungen zur Anwendung kommen. Diese können mit dem Prinzip der kapazitiven Kopplung arbeiten, es kann aber auch an andere Möglichkeiten der kontaktlosen Energie-Übertragung gedacht sein.

Die Bewegungsrichtung 19 in den Figuren bezieht sich stets auf die Bewegung der Rollenelektrodenanordnungen 1 relativ zu den Werkstücken 5a, 5b, es handelt sich also um eine relative Angabe. Zwar wird vorzugsweise die Rollenelektrodenanordnung 1 relativ zu den Werkstücken 5a, 5b bewegt, jedoch ist auch der umgekehrte Fall denkbar. Werden die zu verschweißenden Werkstücke 5a, 5b relativ zu einer oder zwei feststehenden Rollenelektrodenanordnungen 1 bewegt, so erfolgt die Bewegung dieser Werkstücke 5a, 5b in Bezug auf die Figuren 3, 5 und 9 entsprechend in Gegenrichtung des Pfeils 19.

Ferner kann in sämtlichen Ausführungsbeispielen umfassend zwei Rollenelektrodenanordnungen 1 daran gedacht sein, nur eine der Rollenelektrodenanordnungen 1 mit dem Generator zu verbinden und die zweite Rollenelektrodenanordnung 1 zu erden. Insbesondere in Bezug auf die Figuren 5 bis 8 gilt dies selbstverständlich sowohl für die oben dargestellte als auch für die unten dargestellte Rollenelektrodenanordnung 1.

### Bezugszeichenliste

| | | | | | |
|---|---|---|---|---|---|
| 1 | Rollenelektrodenanordnung | 34 | | | |
| 2 | Kern | 35 | | | |
| 3 | Beschichtung | 36 | | | |
| 4 | Generator | 37 | | | |
| 5 | Werkstück | 38 | | | |
| 6 | Pfeil | 39 | | | |
| 7 | Rollenelektrode | 40 | | | |
| 8 | Flächige Gegenelektrode | 41 | | | |
| 9 | Zuleitung | 42 | | | |
| 10 | Abnehmer | 43 | | | |
| 11 | Einrichtung zur kontaktlosen Übertragung | 44 | | | |
| 12 | Geerdeter Auflagentisch | 45 | | | |
| 13 | Länge der Andruckzone | 46 | | | |
| 14 | Keilförmiger Bereich | 47 | | | |
| 15 | Lager | 48 | | | |
| 16 | | 49 | | | |
| 17 | | 50 | | | |
| 18 | | 51 | | | |
| 19 | Bewegungsrichtung | 52 | | | |
| 20 | Drehachse | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Rollenelektrodenanordnung (1) zur Beaufschlagung zweier Kunststoff-Abschnitte zumindest eines Werkstücks (5a, 5b) mit einem hochfrequenten elektrischen Wechselfeld zum Verbinden der Abschnitte durch Kunststoff-Hochfrequenzschweißen, umfassend
einen Kern (2), welcher zumindest teilweise aus elektrisch leitendem Material besteht und von einer deformierbaren elektrisch isolierenden Beschichtung (3) umgeben ist,
**dadurch gekennzeichnet, dass** Rollenelektrodenanordnung (1) kugelförmig oder zumindest im Wesentlichen kugelförmig ausgebildet ist.

2. Rollenelektrodenanordnung (1) nach Anspruch 1, **dadurch gekennzeichnet, dass** die Frequenz des Wechselfelds in einem ISM-Band liegt.

3. Vorrichtung zur Beaufschlagung eines Werkstücks (5a, 5b) mit einem hochfrequenten elektrischen Wechselfeld umfassend einen Hochfrequenzgenerator sowie zumindest eine Rollenelektrodenanordnung (1) nach einem der Ansprüche 1 oder 2.

4. Vorrichtung nach Anspruch 3, **gekennzeichnet durch** eine Gegenelektrodenanordnung (1), welche nach zumindest einem der Ansprüche 1 oder 2 ausgebildet ist.

5. Vorrichtung nach einem der Ansprüche 3 oder 4, **dadurch gekennzeichnet, dass** die Rollenelektrodenanordnung (1) oder zumindest eine der Rollenelektrodenanordnungen (1) eingerichtet ist, um angetrieben zu werden, um das zu bearbeitende Werkstück (5a, 5b) zu transportieren.

6. Vorrichtung nach zumindest einem der Ansprüche 3 bis 5, **gekennzeichnet durch** eine Einrichtung (11) zur kontaktlosen Energieübertragung auf die zumindest eine Rollenelektrodenanordnung (1).

7. Vorrichtung nach zumindest einem der Ansprüche 3, 5 oder 6, **gekennzeichnet durch** einen Tisch als Gegendruckelement.

8. Vorrichtung nach Anspruch 7, **dadurch gekennzeichnet, dass** die Rollenelektrodenanordnung (1) an einem Achssystem oder an einem Knickarmroboter geführt wird.

9. Vorrichtung nach zumindest einem der Ansprüche 3 bis 8, **dadurch gekennzeichnet, dass** die Rollenelektrodenanordnung (1) oder zumindest eine der Rollenelektrodenanordnungen (1) mit seitlich geerdeten Metallscheiben versehen ist, welche gegenüber der Rollenelektrodenanordnung (1) elektrisch isoliert sind.

10. Verfahren zur Beaufschlagung zweier Kunststoff-Abschnitte zumindest eines Werkstücks (5a, 5b) mit einem hochfrequenten elektrischen Wechselfeld zum Verbinden der Abschnitte durch Kunststoff-Hochfrequenzschweißen, mittels einer Vorrichtung nach zumindest einem der Ansprüche 3 bis 9, **dadurch gekennzeichnet, dass** das zu bearbeitende Werkstück (5a, 5b) mit einer Rollenelektrodenanordnung (1) nach einer der Ansprüche 1 oder 2 mit einer Kraft beaufschlagt wird.

11. Verfahren nach Anspruch 10, **dadurch gekennzeichnet, dass** die Frequenz des Wechselfelds in einem ISM-Band liegt.

12. Verfahren nach einem der Anspruch 10 oder 11, **dadurch gekennzeichnet, dass** die Übertragung der elektrischen Hochfrequenz auf die Rollenelektrodenanordnung (1) oder zumindest auf eine der Rollenelektrodenanordnungen (1) kontaktlos erfolgt.

## Claims

1. Roller electrode arrangement (1) for applying a high-frequency alternating electric field to two plastic sections of at least one workpiece (5a, 5b) for connecting the sections by plastic high-frequency welding, comprising a core (2) which is at least partly made of electrically conductive material and is surrounded by a deformable electrically insulating coating (3),
**characterized in that**
the roller electrode arrangement (1) is spherical or at least substantially spherical.

2. Roller electrode arrangement (1) according to claim 1, **characterized in that** the frequency of the alternating field lies in an ISM band.

3. Device for applying a high-frequency alternating electric field to a workpiece (5a, 5b), comprising a high-frequency generator and at least one roller electrode arrangement (1) according to one of claims 1 or 2.

4. Device according to claim 3, **characterized by** a counter electrode arrangement (1) which is formed according to at least one of claims 1 or 2.

5. Device according to one of the claims 3 or 4, **characterized in that** the roller electrode arrangement (1) or at least one of the roller electrode arrangements (1) is arranged to be driven in order to transport the workpiece (5a, 5b) to be processed.

6. Device according to at least one of the claims 3 to 5, **characterized by** a device (11) for contactless energy transfer to the at least one roller electrode arrangement (1).

7. Device according to at least one of the claims 3, 5 or 6, **characterized by** a table as counterpressure element.

8. Device according to claim 7, **characterized in that** the roller electrode arrangement (1) is guided on an axis system or on an articulated arm robot.

9. Device according to at least one of the claims 3 to 8, **characterized in that** the roller electrode arrangement (1) or at least one of the roller electrode arrangements (1) is provided with laterally grounded metal discs which are electrically insulated from the roller electrode arrangement (1).

10. Method for applying a high-frequency alternating electric field to two plastic sections of at least one workpiece (5a, 5b) for connecting the sections by plastic high-frequency welding, by means of a device according to at least one of the claims 3 to 9, **characterized in that** a force is applied to the workpiece (5a, 5b) to be processed by means of a roller electrode arrangement (1) according to one of the claims 1 or 2.

11. Method according to claim 10, **characterized in that** the frequency of the alternating field is in an ISM band.

12. Method according to one of the claims 10 or 11, **characterized in that** the transmission of the electrical radio frequency to the roller electrode arrangement (1) or at least to one of the roller electrode arrangements (1) takes place without contact.

## Revendications

1. Agencement d'électrodes à rouleaux (1) permettant de solliciter deux sections en plastique d'au moins une pièce (5a, 5b) avec un champ alternatif électrique à haute fréquence pour la liaison des sections par soudage par haute fréquence de plastique, comprenant un noyau (2), lequel est au moins partiellement constitué d'un matériau électriquement conducteur et est entouré d'un revêtement (3) déformable électriquement isolant, **caractérisé en ce que** l'agencement d'électrodes à rouleaux (1) est réalisé sous forme sphérique ou au moins sensiblement sphérique.

2. Agencement d'électrodes à rouleaux (1) selon la revendication 1, **caractérisé en ce que** la fréquence du champ alternatif se situe dans une bande ISM.

3. Dispositif permettant de solliciter une pièce (5a, 5b) avec un champ alternatif électrique à haute fréquence comprenant un générateur à haute fréquence ainsi qu'au moins un agencement d'électrodes à rouleaux (1) selon l'une des revendications 1 ou 2.

4. Dispositif selon la revendication 3, **caractérisé par** un agencement de contre-électrodes (1), lequel est réalisé selon au moins l'une des revendications 1 ou 2.

5. Dispositif selon l'une des revendications 3 ou 4, **caractérisé en ce que** l'agencement d'électrodes à rouleaux (1) ou au moins l'un des agencements d'électrodes à rouleaux (1) est conçu pour être entraîné afin de transporter la pièce (5a, 5b) à usiner.

6. Dispositif selon au moins l'une des revendications 3 à 5, **caractérisé par** un appareil (11) permettant la transmission d'énergie sans contact à l'au moins un agencement d'électrodes à rouleaux (1).

7. Dispositif selon au moins l'une des revendications 3, 5 ou 6, **caractérisé par** une table en tant qu'élément de contre-pression.

8. Dispositif selon la revendication 7, **caractérisé en ce que** l'agencement d'électrodes à rouleaux (1) est guidé sur un système d'axes ou sur un robot à bras articulé.

9. Dispositif selon au moins l'une des revendications 3 à 8,
**caractérisé en ce que** l'agencement d'électrodes à rouleaux (1) ou au moins l'un des agencements d'électrodes à rouleaux (1) est pourvu de disques métalliques mis à la terre latéralement, lesquels sont isolés électriquement de l'agencement d'électrodes à rouleaux (1).

10. Procédé permettant de solliciter deux sections en plastique d'au moins une pièce (5a, 5b) avec un champ alternatif électrique à haute fréquence pour la liaison des sections par soudage par haute fréquence de plastique, à l'aide d'un dispositif selon au moins l'une des revendications 3 à 9, **caractérisé en ce que** la pièce (5a, 5b) à usiner est sollicitée par une force au moyen d'un agencement d'électrodes à rouleaux (1) selon l'une des revendications 1 ou 2.

11. Procédé selon la revendication 10, **caractérisé en ce que** la fréquence du champ alternatif se situe dans une bande ISM.

12. Procédé selon l'une des revendications 10 ou 11, **caractérisé en ce que** la transmission de la haute fréquence électrique à l'agencement d'électrodes à rouleaux (1) ou au moins à l'un des agencements d'électrodes à rouleaux (1) s'effectue sans contact.
